# EUROPÄISCHE PATENTSCHRIFT

(11) **EP 0 804 329 B1**
(45) Veröffentlichungstag und Bekanntmachung des Hinweises auf die Patenterteilung: **01.09.1999**
(21) Anmeldenummer: 95925772.6
(22) Anmeldetag: 27.06.1995
(51) Int. Cl.: B29C 45/14, G01P 1/02

(54) **VERFAHREN ZUM DÜNNWANDIGEN UMGIESSEN EINER ZU DER UMGOSSENEN WAND GENAU AUSGERICHTETEN ELEKTRONIKSCHALTUNG UND ELEKTRONIKSCHALTUNG HIERZU**
PROCESS FOR THE THIN-WALLED POTTING OF AN ELECTRONIC CIRCUIT PRECISELY ALIGNED WITH THE CAST WALL AND ELECTRONIC CIRCUIT THEREFOR
PROCEDE D'ENROBAGE AVEC UNE PAROI MINCE D'UN CIRCUIT ELECTRONIQUE ALIGNE AVEC PRECISION AVEC LA PAROI D'ENVELOPPE ET CIRCUIT ELECTRONIQUE A CET EFFET

(30) Priorität: 29.06.1994 DE 4422739
(43) Veröffentlichungstag der Anmeldung: 05.11.1997
(73) Patentinhaber: ITT Automotive Europe GmbH, 60488 Frankfurt (DE); Bayerische Motoren Werke Aktiengesellschaft, 80788 München (DE)
(72) Erfinder: WEHLING, Hans, Wilhelm, D-46119 Oberhausen (DE); STUMPE, Reinhard, D-73765 Neuhausen (DE); KUHN, Joachim, D-81247 München (DE)
(74) Vertreter: Dreiss, Fuhlendorf, Steimle & Becker
(86) Internationale Anmeldenummer: EP9502497
(87) Internationale Veröffentlichungsnummer: WO9600645

(56) Entgegenhaltungen:
- EP-A- 0 642 026
- WO-A-93/14618
- CH-A- 576 334
- FR-A- 2 576 245
- US-A- 3 363 040
- US-A- 5 137 677

## Beschreibung

Die Erfindung betrifft eine in einem Gehäuse abgedichtet angeordnete Elektronikschaltung, wobei mindestens ein Teil der Elektronikschaltung in sehr geringem Abstand präzise ausgerichtet zur Außenfläche der gegossenen Umhüllung angeordnet sein soll. Bei einer derartigen Elektronikschaltung kann es sich beispielsweise um einen Zahnradsensor mit Hall-IC, oder ABS-Sensor mit Hall-IC handeln, der zur Messung einer Drehbewegung dicht an ein drehendes System angekoppelt sein muß. Die so erhaltenen Informationen können beispielsweise zur Geschwindigkeitsmessung bei Tachometern oder zur Lenkwinkelmessung bei Lenkgetrieben verwendet werden. An derartige Sensoren werden die Bedingungen gestellt, daß sie einerseits sehr robust und damit gegenüber Einflüssen der Umgebung gut abgedichtet sein sollen. Zum anderen ist es aber auch, um ein hinreichend großes und genaues Signal durch die verwendeten Hall-IC's zu erreichen, notwendig, daß der Abstand zwischen dem Hall-IC und dem drehenden System sehr gering ist. Daraus resultiert, daß zumindest an der Koppelstelle zwischen drehendem System und Elektronikschaltung die Gehäusewand äußerst dünn sein muß.

Die hier behandelten Probleme werden u.a. in der DE-OS 41 42 727 und der DE-OS 41 41 958 behandelt. Um die o.g. Forderungen zu erreichen, wurde bisher der Hall-IC in einer Fassung gehalten, die ggf. auch an anderer Stelle weitere Abschnitte eines elektronischen Schaltkreises aufnahm und die so bestückte Fassung zentriert in ein Gehäuse eingefügt. Dabei konnte das Gehäuse selbst wiederum aus mehreren Teilen bestehen, die zum einen beispielsweise in Form einer Metallhülse oder Kunststoffhülse für eine sichere dünnwandige Ummantelung des Schaltkreises sorgten, während der hinsichtlich der Wandstärke unkritische Teil des Gehäuses durch einen Kunststoffabschnitt gebildet wurde.

Aufgabe der Erfindung ist es daher, eine elektrische Schaltung zu schaffen, welche präzise in ihrem robust aufgebauten Gehäuse ausgerichtet ist, wobei die mit dem Gehäuse versehene Schaltung zu dem preiswert in der Herstellung sein soll. Aufgabe der Erfindung ist es insbesondere zu ermöglichen, daß die Wände des Gehäuses im Bedarfsfall sehr dünn ist und speziell im Bereich dieser dünnen Gehäusewand zumindest ein elektrisches Bauteil sehr präzise auf diese Wand hin ausgerichtet sein soll.

Aufgabe der Erfindung ist es, weiterhin ein Verfahren zur Herstellung einer derartigen elektrischen Schaltung anzugeben sowie eine Einrichtung zu offenbaren, mit der dieses Verfahren durchgeführt werden kann.

Aus der CH-A-576334 (siehe dort Anspruch 1 oder Spalte 4, Zeile 35-41) ist es bekannt, Haltestifte während des Verfestigens des Kunststoffs zu einem Zeitpunkt zurückzuziehen, in dem der Kunststoff die freigewordenen Räume noch ausfüllen kann. Hinsichtlich der vorbekannten WO 93/14618 ergibt sich entsprechendes (siehe beispielsweise Abstract). Bei diesen bekannten Verfahren werden die abstützenden Halter in der üblichen Weise gleichzeitig aus der Form herausgezogen. Dies kann aber wegen des dann in die Hohlräume fließenden Kunststoffs zu Verschiebungen des im Kunststoff schwimmenden Gußstücks (Elektronikschaltung) führen. Bei einer Reihe von Elektronikschaltungen wie beispielsweise hochgenauen Sensoren, ist eine derart unbestimmte Lage der Elektronikschaltung innerhalb der Vergußmasse nicht zu tolerieren.

Die Erfindung geht daher aus von einem Verfahren, welches sich aus dem Gattungsbegriff des Anspruchs 1 ergibt und löst die hinsichtlich des erwünschten Verfahrens zu lösende Aufgabe durch die sich aus dem kennzeichnenden Teil des Anspruchs 1 ergebenden nacheinander folgenden Schritte.

Das erfinderische Verfahren besteht im Prinzip also darin, die elektrische Schaltung durch Umgießen mit einem langsam aushärtenden Kunststoff mit einem Gehäuse zu versehen. Dabei wird über den Zentrierhalter die elektrische Schaltung, die beispielsweise auf einer Leiterplatte aufgebracht werden kann, während des Gießvorgangs und während der Verfestigung in der gewünschten Lage gehalten. Zu einer Zeit, in der der Kunststoff noch weich ist, wird dann der Zentrierhalter zurückgezogen, wobei die elektrische Schaltung in dem noch nicht vollständig verfestigten Kunststoff durch einen zusätzlich zum dem Zentrierhalter vorgesehenen Abstandshalter in der gewünschten Lage gehalten wird. Da der weiche Kunststoff während des Zurückziehens des Zentrierhalters den sich ergebenden Hohlraum weitgehend ausfüllt, wird somit einerseits erreicht, daß die elektrische Schaltung in ihre Lage in dem Kunststoffgehäuse verbleibt, während andererseits die Schaltung vollständig von Kunststoff umhüllt wird. Der Vorgang der Umhüllung läßt sich noch weiter verbessern, indem man beim Spritzgießverfahren während des Zurückdrehens den Spritzdruck aufrechterhält so daß nicht nur die durch das Zurückziehen sich ergebenden Ausnehmungen durch Saugkräfte und die Schwerkraft gefüllt werden, sondern gleichzeitig auch noch der Spritzdruck zum Auffüllen der Ausnehmungen beiträgt.

Die elektrische Schaltung, die vorzugsweise auf einer Leiterplatte aufgebracht ist, wird man mittels des Zentrierhalters derart zentrieren, daß über deren Fläche bzw. deren Umfang verteilte Zentrierfinger die Platte während des Gieß- bzw.

Spritzvorgangs in ihrer Lage halten. Eine gewisse Verschiebung kann aber dadurch auftreten, daß durch den Gieß- oder Spritzdruck, der auf der die Leiterplatte wirkt, diese verwölbt wird und somit der Abstand der Leiterplatte in ihrem mittigen, nicht von den Zentrierfingern unterstützten Bereich während des Gießvorgangs einen unbestimmten Abstand zum Boden der Form hat. Dies tritt insbesondere gerade dann auf, wenn der Abstand der Leiterplatte bzw. eines ihrer Bauelemente zu dem Boden der Gußform sehr gering sein soll, so daß die beim Gießen erhaltene Toleranz dieses Abstandes sehr groß wird. Hinzu kommt, daß bei einem derart geringen Durchtrittsraum zwischen Leiterplatte und Boden der Form für den Kunststoff dessen Fließvorgang stark behindert wird, so daß eine absolute Dichtheit des Gehäuses in Frage gestellt wird. Es kann daher passieren, daß trotz der Sicherung ein wesentlicher Bereich der Leiterplatte, dessen exakte Lage gegenüber der Außenfläche des Gehäuses entscheidend ist, in seinem Abstand außerhalb der gewünschten engen Toleranzen liegt. Zur Lösung dieses Problems schlägt die Erfindung die Merkmalskombination nach Anspruch 2 vor.

Es wird daher die Verwendung eines zusätzlichen Abstandshalters gegenüber dem Zentrierhalter unabhängig bewegbaren vorgeschlagen, der gezielt an der Stelle der Leiterplatte angreifen kann, deren Abstand zur Außenfläche des Gehäuses entscheidend ist.

Das Verfahren nach Anspruch 2 bewährt sich insbesondere dann, wenn gemäß Anspruch 3 die kritische Stelle durch die Fläche eines elektrischen Bauelements gegeben ist, welches zu der elektrischen Schaltung gehört und dessen Lage exakt zu der geringfügig entfernten Oberfläche des Gehäuses ausgerichtet werden soll. Die beschriebenen Maßnahmen sind insbesondere dann sehr vorteilhaft, wenn es sich bei dem auf genauen Abstand zu haltenden Bauelement um ein Hall-IC handelt, da die Genauigkeit und die Höhe des gewonnenen Signals besonders von der Lage des IC's von dem sich bewegenden System, beispielsweise den Zähnen eines sich drehenden Zahnrades, abhängt.

Die Merkmalskombination nach Anspruch 2 gestattet insbesondere die Verbesserung des Verfahrens gemäß den Merkmalen nach Anspruch 4. Dabei sind der Abstandshalter und der Zentrierhalter unabhängig voneinander beweglich, können also im definierten zeitlichen Abstand nacheinander aus der Form zurückgezogen werden. Das schafft die Möglichkeit, während eines ersten Zeitraums, in dem der Kunststoff noch sehr dünnflüssig ist, die für den Abstand kritische Stelle der elektrischen Schaltung (z.B. dem Hall-IC) durch den Abstandshalter und die Leiterplatte zusätzlich durch den Zentrierhalter abzustützen. Da wegen des geforderten Abstands der Abstandshalter nur geringfügig aus dem Boden der Form hervorragt, wird man diesen zurückziehen, solange die Kunststoffmasse noch weich genug ist, um den entstehenden Hohlraum fugenfrei und dicht zu verschließen. Dabei darf allerdings der Kunststoff nicht so weich sein, daß die Lage des Bauelements sich während des Rückzugs des Abstandshalters ändern könnte.

In einem zweiten Schritt werden dann, wie oben schon erläutert, die Zentrierfinger zurückgezogen, so daß sich eine fugenlose komplette Umhüllung der elektrischen Schaltung ergibt.

Wie weiter unten noch erläutert, können unter bestimmten Umständen die beiden Halter vorteilhaft auch in umgekehrter Reihenfolge zurückgezogen werden, so daß nach dem Zurückziehen des Zentrierhalters das Zurückziehen des Abstandshalters folgt.

Will man an der der Bodenfläche der Gußform entsprechenden Außenfläche des Schaltungsgehäuses eine möglichst ebene Oberfläche erhalten, so empfiehlt sich in Weiterbildung der Erfindung die Merkmalskombination nach Anspruch 5.

Obwohl die oben beschriebenen Maßnahmen gute Resultate ergeben, so kann es doch passieren, daß zum einen die mit der elektrischen Schaltung bestückte Leiterplatte während des Gießvorgangs aufschwimmt und damit nicht die vorgeschriebene Lage einnimmt. Weiterhin kann es möglich sein, daß die kritische Stelle (beispielsweise das Hall-Element) nicht exakt auf dem Abstandshalter aufliegt, obwohl der Abstandshalter die gewünschte Stärke der Gehäusewand oberhalb der kritischen Leiterplattenstelle festlegt. Um solche Schwierigkeiten zu verhindern, empfiehlt sich in Weiterbildung der Erfindung die Merkmalskombination nach Anspruch 6. Hierbei wird zusätzlich noch eine Arretiereinrichtung verwendet, die die Leiterplatte gegen den Abstandshalter drückt und so dafür sorgt, daß beispielsweise der Hall-IC auch während des Gießvorgangs sicher auf dem Abstandsfinger aufliegt. Um zu verhindern, daß während des Rückzugs des Abstandshalters die Arretiereinrichtung die Leiterplatte in Richtung des sich zurückziehenden Abstandshalters drückt, kann sich empfehlen, daß die Arretiereinrichtung kurz vor dem Abstandshalter zurückgezogen wird. Bei einem gleichzeitigen Zurückziehen sowohl der Arretiereinrichtung, als auch des Abstandshalters, hat man dagegen den Vorteil, daß die Saugkräfte in beiden Richtungen etwa groß sind, so daß die Leiterplatte in diesem Bereich sicher an ihrem Ort verbleibt.

Aufgabe der Erfindung ist es weiterhin, eine Gußform anzugeben, mit der sich das Verfahren der vorangegangenen Ansprüche in einfacher Weise durchführen läßt. Hierzu schlägt die Erfindung die Verwendung der Merkmalskombination nach Anspruch 7 vor. Danach besitzt der Abstandshalter einen in den Innenraum der Gußform einführbaren Abstandsfinger, der das Hall-Element der Elektroschaltung abstützt. Selbstverständlich kann es sich im Rahmen der Erfindung auch um ein anderes Bauelement oder um eine für den Abstand wesentliche Stelle der elektrischen Schaltung handeln.

Entsprechend der Merkmalskombination nach Anspruch 8 sind die Zentrierfinger in geeigneter Entfernung um den zentralen Abstandsfinger herumgruppiert. So können die Zentrierfinger beispielsweise gleichmäßig an der Seitenwand des Gußraums verteilt sein. Sie können weiterhin derart ausgestaltet sein, daß sie am Randbereich der Leiterplatte der elektrischen Schaltung angreifen oder aber auch direkt auf den Rand der Leiterplatte einwirken (Anspruch 9). Um die Ebene der Lage des abgestützten Bauelements (Hall-Element) besser festlegen zu können, kann sich auch die Merkmalskombination nach Anspruch 10 empfehlen. Dabei ist wichtig, daß einerseits der Abstandsfinger nicht einen zu großen Durchmesser erhält, damit die Saugkräfte sowie die durch nachfließenden Kunststoff zu schließende Fläche bei dessen Zurückfahren nicht zu groß werden. Andererseits soll der Durchmesser dieses Fingers auch nicht zu gering sein, um eine hinreichende Auflagefläche für das Bauelement zu gewähren.

Entsprechend der Merkmalskombination nach Anspruch 11 läßt sich die zentrierende Wirkung in seitlicher Richtung der Leiterplatte durch eine entsprechende Abschrägung der Auflageflächen an den Zentrierfingern erreichen. Der konische Verlauf dieser Flächen erleichtert gleichzeitig auch ein Zurückziehen der Zentrierfinger aus der sich erhärtenden Gußmasse.

Um den Abstandsfinger vor oder nach den Zentrierfingern zurückziehen zu können, empfiehlt sich in Weiterbildung der Erfindung die Merkmalskombination nach Anspruch 12. Die Merkmale nach Anspruch 13 sichern die elektrische Schaltung vor dem Aufschwimmen während des Spritzgießens und sorgen gleichzeitig für eine exakte Lage für die kritische Stelle auf der Leiterplatte, indem diese zwischen Arretiereinrichtung und Abstandshalter eingeklemmt wird.

Um zu erreichen, daß durch die Arretiereinrichtung kein mechanischer Schaden an der elektrischen Schaltung angerichtet wird, kann sich in Weiterbildung der Erfindung die Merkmalskombination nach Anspruch 14 empfehlen, soweit ein Hall-Sensor mit Magnet angewendet wird.

Für den Fall, daß die Zentrierfinger (vorzugsweise drei, zentrisch zueinanderliegen) keine schrägen Flächen aufweisen, auf der die Kanten der Leiterplatte aufliegen, ist nicht auszuschließen, daß die Ränder der Leiterplatte zwischen den Seitenwänden der Zentrierfinger eingeklemmt sind. Beim Zurückziehen der Zentrierfinger nach dem Abstandsfinger bestände dann die Möglichkeit, daß die Zentrierfinger die Leiterplatte nach unten ziehen und somit der vorgeschriebene Abstand im Bereich des Abstandshalters nicht eingehalten wird. Für solche Fälle empfiehlt sich insbesondere den Abstandshalter nach den Zentrierfingern zurückzuziehen, so daß auch unter diesen Umständen die definierte Lage des Hall-Elements während des Gießvorgangs eingehalten wird.

Aufgabe der Erfindung ist es schließlich, einen Sensor anzugeben, welcher preiswert die eingangs geschilderten Bedingungen (exakte Ausrichtung zumindest eines Bauelementes der zugehörigen elektrischen Schaltung bei sehr geringer Wandstärke des einfach hergestellten Gehäuses) erfüllt. Die Erfindung schlägt in Erfüllung der Aufgabe bei einer derartigen Schaltung die in Anspruch 15 aufgeführte Merkmalskombination vor. Ein derartiger Sensor arbeitet insbesondere dann recht präzise und stellt ein vergleichsweise großes Ausgangssignal zur Verfügung, wenn die in Anspruch 16 aufgeführten Merkmale erfüllt werden.

Während bei den bekannten Sensoren das Gehäuse aus mehreren Teilen besteht und somit die exakte Anordnung des Sensors auch von dem exakten Zusammenbau der Gehäuseteile abhing, lassen sich die bei der Befestigung gegebenen Schwierigkeiten durch die Merkmale nach Anspruch 17 beseitigen. Zusätzlich läßt sich das erfindungsgemäße Gehäuse auch noch zur Lagesicherung des Zuführungskabels gemäß Anspruch 18 ausnutzen, was insbesondere für den Fall gilt, daß die Längsrichtung des Sensors im Winkel zu der Abführrichtung des Kabels liegt. Auch wird ein Befestigen des Sensors ermöglicht, weil eine Befestigungslasche mit angespritzt werden kann. Ein Ausführungsbeispiel der Erfindung wird nachfolgend anhand der Zeichnung erläutert. Darin zeigt
- Fig. 1: eine Gußform gemäß der Erfindung mit einer darin befindlichen umgossenen elektrischen Schaltung gemäß der Erfindung,
- Fig. 2: die Gußform nach Fig. 1, wobei Abstandshalter und Zentrierhalter zurückgezogen sind,
- Fig. 3: einen in Fig. 1 von unten gesehenen Schnitt durch die mit einem Gehäuse versehene elektrische Schaltung, wobei der Schnitt entlang der Oberfläche der elektrischen Schaltung geführt ist,
- Fig. 4: in verkleinerter und skizzierter Darstellung die Gußform nach Fig. 1 mit angeflanschter Arretiereinrichtung in ausgefahrenem Zustand und eine erste Betätigungseinrichtung und
- Fig. 5: eine Ansicht gemäß Fig. 4 mit zurückgezogener Arretiereinrichtung mit angedeuteter zweiter Betätigungseinrichtung.

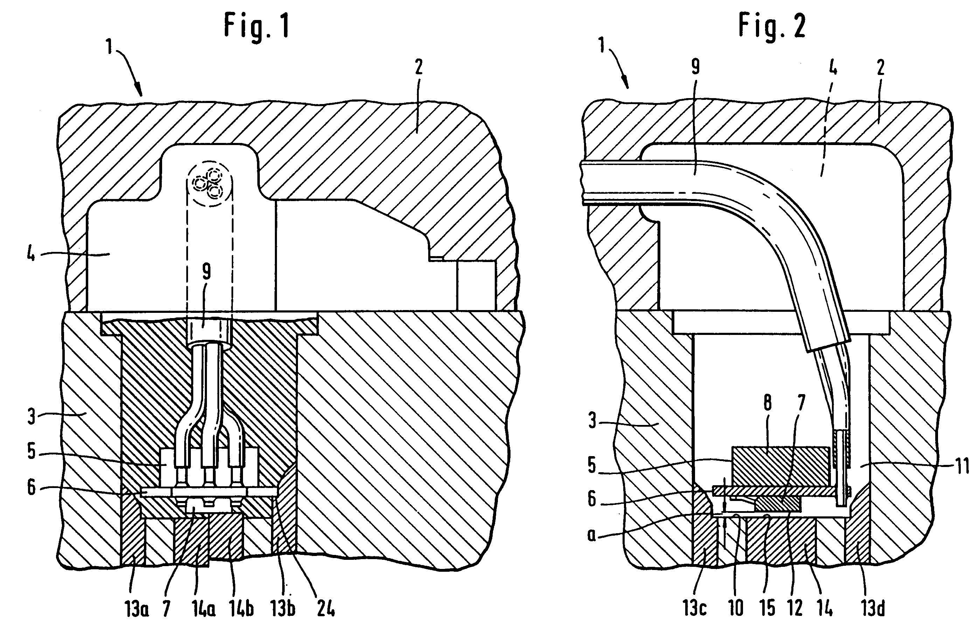

Fig. 1 zeigt ein Gußgehäuse 1 mit ausschnittsweise dargestellten geschnittenen Gehäuseteilen 2 und 3, welche den auszugießenden Hohlraum als Gußform umschließen. In dem Gußgehäuse 1 befindet sich das durch ein Spritzgußverfahren gebildetes Schaltungsgehäuse 4, welches im wesentlichen eine elektrische Schaltung 5 umschließt. Die elektrische Schaltung 5 ist auf einer Leiterplatte 6 angeordnet und ist hier vorzugsweise als Sensorschaltung ausgestaltet, welche unterhalb der Leiterplatte 5 ein Hall-IC 7 und oberhalb der Leiterplatte einen Magneten 8 aufweist. Zu der elektrischen Schaltung 5 führt eine Verbindungsleitung 9, die mit Steckern verbunden sein kann. Die Steckkontakte können sich aber ebenfalls am Schaltungsgehäuse 4 befinden, so daß der Stecker in das Gehäuse 4 integriert sein kann. Die Verbindungsleitung verläuft, wie aus Fig. 2 ersichtlich, in einem Winkel, wobei das Gehäuse 4 als Knickschutz dient.

Für die Erfindung wichtig ist nun, daß der Hall-IC 7, welcher mehrere Hall-Elemente enthalten kann, mit seiner der Bodenfläche 10 der auszugießenden Gußform 11 gegenüberliegenden IC-Fläche 12 genau ausgererichtet ist und diese dabei nur einen sehr geringen Abstand a von beispielsweise 0,3 mm aufweist. Dabei soll das Schaltungsgehäuse 4 die elektrische Schaltung 5 auch im Bereich des geringen Abstandes a fugenfrei und absolut dicht umschließen.

Um dies zu erreichen, dienen ein Zentrierhalter 13a,13b und ein Abstandshalter 14a,14b, die voneinander unabhängig bewegbar sind. Hinsichtlich des Zentrierhalters sind in Fig. 1 und 2 zwei gemeinsam bewegte Zentrierfinger 13a,13b dargestellt, wobei in Fig. 1 der rechte Zentrierfinger 13b in in die Gußform 11 eingefahrene Lage gezeigt ist. Die beiden Zentrierfinger 13c und 13d in Fig. 2 sind in zurückgezogener Lage gezeigt. Zum Ausrichten der elektrischen Schaltung 5, insbesondere des Hall-IC's 7 dient weiterhin ein Abstandshalter 14a,14b, von dem nur der Haltefinger 14 gezeigt ist, welcher in Fig. 2 in zurückgezogener Lage und in Fig. 1 in der linken Hälfte in zurückgezogener Lage 14a und auf der rechten Hälfte dieser Figur in eingefahrener Lage 14b gezeigt ist.

In Fig. 2 ist gut zu erkennen, daß in zurückgezogener Lage die Stirnfläche 15 des Abstandsfingers 14 parallel zur Bodenfläche 10 der Gußform 11 liegt und gleichzeitig parallel zur IC-Fläche 12 ausgerichtet ist, wie dies mit der Erfindung erreicht werden soll. Dabei soll, wie oben schon erläutert, der Abstand a sehr klein sein, beispielsweise etwa 0,3 mm.

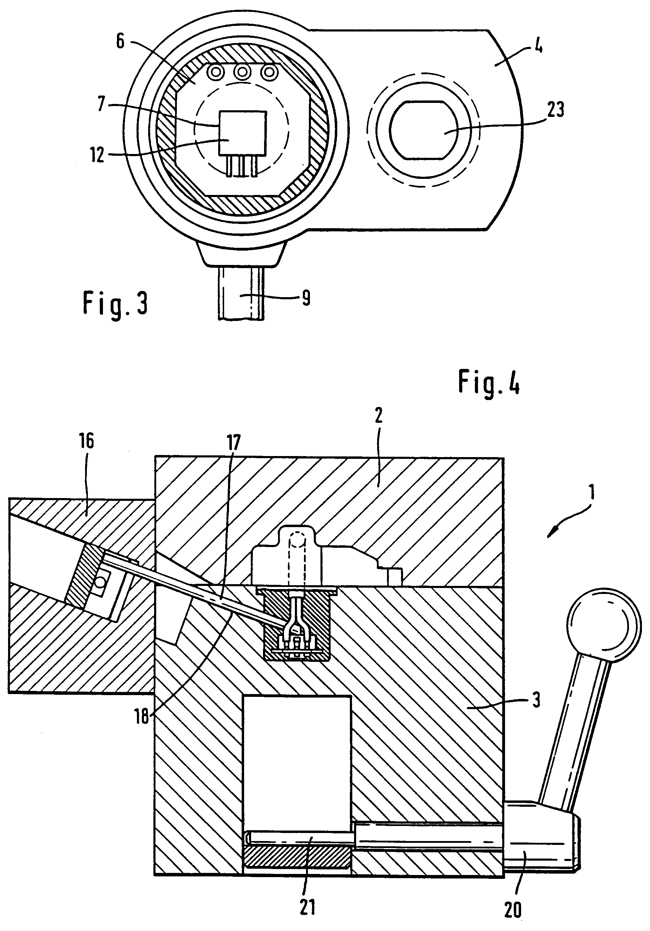

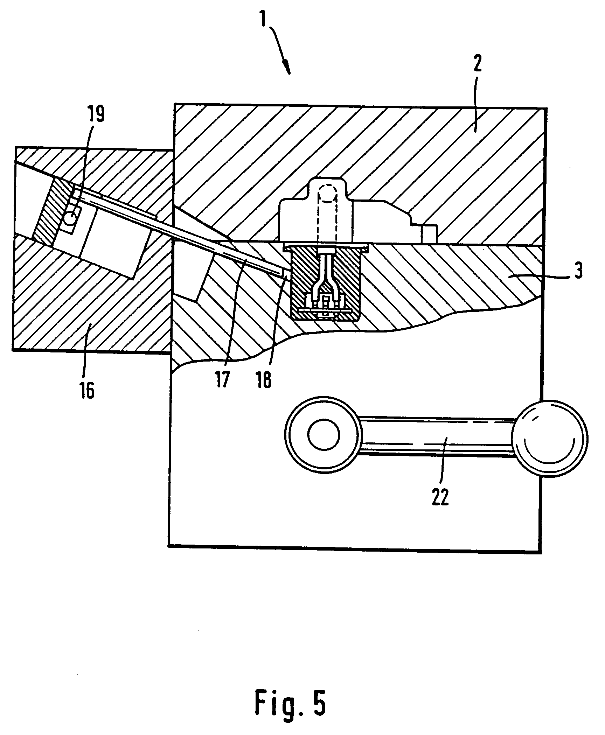

Fig. 4 zeigt weiterhin noch eine Arretiereinrichtung 16, die an das Gehäuse 1 angeflanscht ist, und die mit einem Arretierstift durch einen schräg durch die Gehäusehälfte 3 ragende Kanal 18 auf den Magnet 8 der elektrischen Schaltung 5 weist. Dabei ist die Arretiereinrichtung 16 in Fig. 4 mit in die Gußform 11 eingefahrenen Zustand dargestellt, in der der Arretierstift 17 auf den Magnet 8 einwirkt und in Fig. 5 zurückgezogenen Zustand dargestellt. Der Stift 17 kann in an sich bekannter Weise über einen Exzenter 19 angetrieben werden, der mit einer nicht dargestellten Kurbel verbunden ist.

In Fig. 4 ist noch eine erste Betätigungseinrichtung 20 angedeutet, welche über einen Exzenter 21 die Zentrierfinger 13a bis 13d des Zentrierhalters 13 anzutreiben vermag, während eine zweite Betätigungseinrichtung 22 in Fig. 5 an dem Haltefinger 14 des Abstandshalters angreift und den Haltefinger 14 in die Gußform 11 einzufahren (siehe 14b) bzw. auszufahren (siehe 14a) vermag.

Das Umgießen der Sensorschaltung 5 und damit das Gießen des Gehäuses 4 kann nun folgendermaßen geschehen. Alle einstückig miteinander verbundenen Zentrierfinger 13 werden, wie hinsichtlich des Zentrierfingers 13b in Fig. 1 gezeigt, in die Gußform 11 eingefahren. Ebenso wird der Abstandsfinger 14 um den Betrag a die hinsichtlich Fig. 1 rechte Hälfte (Abstandsfinger 14b) dargestellt, eingefahren. Sodann wird die mit der Verbindungsleitung 9 verbundene elektrische Schaltung 5 in die Gußform 11 derart eingelegt, daß der Hall-IC 7 auf dem Abstandsfinger 14b aufliegt und der Rand der Leiterplatte 11 durch die Zentrierfinger 13b zentriert und gehalten ist. Die Zentrierfinger können hierzu Auflageflächen 24 besitzen. Danach wird in beliebiger Reihenfolge die Gußform 11 durch Aufsetzen des zweiten Gehäuseteils 2 auf das erste Gehäuseteil 3 geschlossen und der Zentrierstift 17 Arretiereinrichtung so weit ausgefahren, bis er auf den Magnet 8 aufsetzt und durch die somit ausgeübte Kraft die übereinanderliegende Einheit aus Magnet 8, Leiterplatte 6 und Hall-IC 7 zwischen Abstandsfinger 14b und Arretierstift 17 einklemmt. Die IC-Fläche 12 befindet sich damit im vorgegebenen Abstand a zu der Bodenfläche 10 der Gußform 11.

Anschließend wird der langsam sich verfestigende Kunststoff an einer geeigneten Öffnung, vorzugsweise über das erste Gehäuseteil 2 in die Gußform 11 unter Druck eingespritzt, bis die Gußform 11 unter Druck bei in die Gußform eingefahrenen Haltemitteln ausgefüllt ist. Sobald sich die Kunststoffmasse hinreichend verfestigt, werden die Zentrierfinger 13b zurückgezogen, bis sie sich in der Lage befinden, wie sie in 13a,13c und 13d dargestellt ist. Der Abstandshalter behält seine Lage 14b. Anschließend werden in wählbarer Reihenfolge oder gleichzeitig der Stift 17 und der Abstandsfinger 14 zurückgezogen, so daß diese Halteelemente die in Fig. 5 bzw. Fig. 2 angezeigte Lage übernehmen. Der noch hinreichend weiche Kunststoff füllt den sich durch das Zurückziehen jeweils ergebenden Hohlraum aus, was auch für den Hohlraum hinsichtlich der Zentrierfinger 13 gilt. Wichtig dabei ist, daß beim Zurückziehen der beiden zuletzt genannten Halteelemente der zur Formung des Schaltungsgehäuses 4 dienende Kunststoff schon hinreichend fest ist, so daß aufgrund der vergleichsweise großen Leiterplattenfläche sich die Leiterplatte auch dann nicht bewegt, wenn der Haltefinger 14 bzw. der Stift 17 zurückgezogen werden. Im übrigen sind die hierdurch ausgeübten Kräfte vergleichsweise gering, weil der Abstandsfinger in seinem Durchmesser sehr klein gemacht werden kann und aufgrund des geringen Abstandes der sich ergebende Hohlraum recht gering ist. Entsprechendes gilt hinsichtlich des Stiftes 17, dessen Sogwirkung auf die elektrische Schaltung 5 aufgrund der Schräglage des Stiftes 17 ohnedies nicht sonderlich groß ist. Die Gußform kann derart aufgebaut werden, daß sich die Sogkräfte der beiden zuletzt genannten Halteelemente bei gleichzeitigem Zurückziehen aufheben.

Die Erfindung schafft zusätzlich noch die Möglichkeit, an definierter Stelle eine Befestigungsöffnung 23 vorzusehen, die die Form eines Langlochs hat, so daß durch diese Maßnahmen das Sensorgehäuse bei der Befestigung über das Langloch sehr präzise ausgerichtet ist.

## Patentansprüche

1. verfahren zum Umgießen einer Elektronikschaltung, insbesondere der Sensorschaltung einer Wegemeßeinrichtung in Kraftfahrzeugen, wobei die Elektronikschaltung (5) auf einen innerhalb des Gußformgehäuses beweglich angeordneten, in die Gußform (11) eingefahrenen Zentrierhalter (13a bis 13d) eingelegt wird, daß danach das Gußformgehäuse geschlossen und mit einem aushärtenden Grundstoff (4) gefüllt wird, daß der Kunststoff sich während des Befüllens versteift, daß während des Versteifens, aber noch vor dem Aushärten, der in die auszugießende Gußform (11) ragende Zentrierhalter (13) zurückgezogen und daß nach dem Aushärten die umgossene elektrische Schaltung (5) aus der Gußform (11) genommen wird, dadurch **gekennzeichnet**, daß zusätzlich zu dem Zentrierhalter (13) ein Abstandshalter (14) die Elektronikschaltung (5) während des Befüllens mit Kunststoff abstützt, der gegenüber dem Zentrierhalter zeitlich versetzt aus der Form gezogen wird.

2. Verfahren nach Anspruch 1, dadurch **gekennzeichnet**, daß die elektrische Schaltung nach dem Einlegen zusätzlich im wesentlichen mittig und vorzugsweise im wesentlichen aus der gleichen Richtung wie durch den Zentrierhalter (13) durch den in die Gußform (11) eingefahrenen Abstandshalter (14) abgestützt wird, der mit mindestens einem Abstandsfinger (14) in die Gußform (11) ragt, welcher während des Versteifens des Kunststoffs aus der Form (11) gezogen wird.

3. Verfahren nach Anspruch 2, dadurch **gekennzeichnet**, daß der Abstandsfinger (14) an einem Bauelement (7), vorzugsweise Hall-IC, der elektrischen Schaltung (5) angreift, welches auf einer Leiterplatte angeordnet ist, welche sich an dem Zentrierhalter (13) abstützt.

4. Verfahren nach Anspruch 2, dadurch **gekennzeichnet**, daß während des Versteifens des Kunststoffes (4) erst der Abstandshalter (14) und dann nach einem vorgegebenen Zeitabschnitt der Zentrierhalter (13) aus der Gußform (11) zurückgezogen wird.

5. Verfahren nach Anspruch 3, dadurch **gekennzeichnet**, daß der Abstandshalter (14) so weit zurückgezogen wird, bis seine der elektrischen Schaltung (5) zugewandte Stirnfläche (15) im wesentlichen mit der Bodenfläche (10) der Gußform (11) abschließt.

6. Verfahren nach einem der vorangegangenen Ansprüche, dadurch **gekennzeichnet**, daß nach dem Einlegen der elektrischen Schaltung (5) und vor dem Einfüllen des Kunststoffs eine Arretiereinrichtung (16,17,19) ausgefahren wird, die eine von dem Abstandshalter (14) weggerichtete Bewegung der elektrischen Schaltung beim Einfüllen des Kunststoffs behindert und daß die Arretiereinrichtung vor dem Zurückziehen des Zentrierhalters (13) und des Abstandshalters (14) zurückgezogen wird.

7. Gußform (11) zum Umgießen einer Elektronikschaltung (5), insbesondere Sensorschaltung einer Wegemeßeinrichtung, bei der ein Zentrierhalter (13) vorgesehen ist, der die Elektronikschaltung (5) während der Befüllung mit Kunststoff abstützt und der während des Versteifens des Kunststoffs aus der Gußform (11) herausziehbar ist, dadurch **gekennzeichnet**, daß zusätzlich ein Abstandshalter (14) mit mindestens einem Abstandsfinger versehen ist, der an im wesentlichen zentraler Stelle der Bodenfläche (10) der Gußform (11) ausfahrbar ist und die eingelegte elektrische Schaltung (5) im wesentlichen an zentraler Stelle vorzugsweise an einem dem Abstandsfinger (14) zugewandten Bauelement der elektrischen Schaltung (5) abstützt.

8. Gußform nach Anspruch 7, dadurch **gekennzeichnet**, daß der Abstandsfinger (14) des Abstandshalters zu den Zentrierfingern (13) des Zentrierhalters im wesentlichen zentral angeordnet ist und die Zentrierfinger (13) Außenbereiche, vorzugsweise Randbereiche, der elektrischen Schaltung (5) abstützen.

9. Gußform nach Anspruch 7 oder 8, dadurch **gekennzeichnet**, daß die elektrische Schaltung (5) auf einer Leiterplatte (6) angeordnet ist und die Zentrierfinger (13) vorzugsweise an den Rändern der Leiterplatte (6) angreifen.

10. Gußform nach einem der Ansprüche 7 bis 9, dadurch **gekennzeichnet**, daß der Abstandsfinger (14) ein Zylinderstift ist, der mit seiner Stirnfläche (15) über ein ihm zugewandt auf der Leiterplatte befestigtes Bauelement (7), vorzugsweise ein Hall-IC, die elektrische Schaltung (5) abstützt.

11. Gußform nach einem der Ansprüche 7 bis 10, dadurch **gekennzeichnet**, daß die Zentrierfinger (13) im Bereich der Seitenwände der Gußform aus der Bodenfläche (10) der Gußform (11) ausfahrbar sind und jeweils eine geneigte Seitenfläche aufweisen, mit der sie an dem Rand der Leiterplatte angreifen.

12. Gußform nach einem der Ansprüche 7 bis 11, dadurch **gekennzeichnet**, daß der bzw. die Abstandsfinger (14) gegenüber dem bzw. den Zentrierfinger(n) unabhängig bewegbar sind.

13. Gußform nach einem der Ansprüche 7 bis 12, dadurch **gekennzeichnet**, daß eine Arretierungseinrichtung (16,17,19) vorgesehen ist, welche einen vorzugsweise schräg durch die Seitenwand der Gußform (11) auf die elektrische Schaltung (5) gerichteten Arretierungsstift (17) aufweist.

14. Gußform nach Anspruch 10, dadurch **gekennzeichnet**, daß die Leiterplatte (6) der elektrischen Schaltung (5) auf der dem Abstandsfinger (14) abgewandten Seite mit einem vergleichsweise großen zweiten Bauelement (8), insbesondere einem Magnet, bestückt ist und daß der Stift (17) im Arretierungszustand an diesem Bauelement angreift.

15. Mit einem Verfahren nach einem der Ansprüche 1 bis 3 hergestellte elektrische Schaltung für eine Bewegungsmeßeinrichtung in Kraftfahrzeugen, **dadurch gekennzeichnet**, daß das Kunststoffgehäuse (4) dieser Schaltung (5) durch eine die elektrische Schaltung (5) unmittelbar umschließende Kunststoffmasse gebildet ist.

16. Sensor nach Anspruch 15, dadurch **gekennzeichnet**, daß sie eine Kapsel (7) mit einem oder mehreren Hall-Elementen aufweist und daß die Gehäusestärke (a) vor der Kapsel (7) kleiner als 0,3 mm ist.

17. Sensor nach Anspruch 15 oder 16, dadurch **gekennzeichnet**, daß eine Befestigungsöffnung (23) an das Gehäuse (4) angegossen ist.

18. Sensor nach einem der Ansprüche 15 bis 17, dadurch **gekennzeichnet**, daß eine Zuleitung (9) zu der Sensorschaltung im Winkel geführt und das Gehäuse den Winkel in Form eines Knickschutzes umschließt.

19. Sensor nach einem der Ansprüche 15 bis 18, **gekennzeichnet** durch die Verwendung von Spritzmaterialien mit denselben Eigenschaften, insbesondere Ausdehnungskoeffizient, wie die umhüllten Elektronikbauteile.

## Claims

1. Process for casting round an electronic circuit, in particular the sensor circuit of a distance-measuring system in motor vehicles, wherein the electric circuit (5) is laid in on a centering holder (13a through 13d) arranged movably inside the casting mould shell and inserted into the casting mould (11), that the casting mould shell (1) is then closed and filled with a slow-setting plastic (4), that the plastic sets during filling, that during setting but before solidification, the centering holder (13) projecting into the casting mould (11) to be filled is withdrawn, and that after solidification, the cast-round electric circuit (5) is removed from the casting mould (11), characterized in that additionally to the centering holder (13) a spreader (14) holds the electronic circuit (5) during the filling with plastic, the spreader will be removed timely offset to the centering holder (13) from the mould.

2. Process according to claim 1, characterized in that after being laid in, the electric circuit (5) is additionally supported essentially in the middle and preferably essentially from the same direction as by the centering holder (13) by the spreader (14) insertable into the casting mould (11), this spreader projects with at least one distance finger (14) into the casting mould (11), whereby the distance finger is withdrawn from the casting mould at a different time than the centering holder.

3. Process according to claim 2, characterized in that the distance finger (14) engages a component (7), preferably Hall IC, of the electric circuit (5); this component is arranged on a printed board that is supported on the centering holder (13).

4. Process according to claim 2, characterized in that during the setting of the plastic (4), first the spreader (14) and then, after a predetermined period, the centering holder (13), are withdrawn from the casting mould (11).

5. Process according to claim 3, characterized in that the spreader (14) is withdrawn until its face (15) facing the electric circuit (5) essentially ends with the bottom surface (10) of the casting mould (11).

6. Process according to one of the preceding claims, characterized in that after the electric circuit (5) is laid in and before the plastic is filled in, a stop mechanism (16,17,19) is extended that prevents the electric circuit from moving away from the spreader (14) while the plastic is being filled in, and that the stop mechanism is withdrawn before the centering holder (13) and the spreader (14) are withdrawn.

7. Casting mould (1) for casting round an electronic circuit, in particular the sensor circuit of a distance-measuring, in which a a centering holder (13) is provided which supports the electronic circuit (5) during the filling with plastic and which is removable from the mould (11) during the hardening of the plastic, characterized in that additionally a spreader (14) is provided with at least one distance finger that can be extended at an essentially central point of the bottom surface (10) of the casting mould and supports the laid-in electric circuit (5) essentially at a central point, preferably at a component (7) of the electric circuit (5), facing the distance finger (14).

8. Casting mould according to claim 7, characterized in that the distance finger (14) of the spreader is arranged essentially centrally in relation to the centering fingers (13) of the centering holder and the centering fingers (13) support outer areas, preferably edge areas, of the electric circuit (5).

9. Casting mould according to claim 7 or 8, characterized in that the electric circuit (5) is arranged on a printed board (6) and the centering fingers (13) preferably engage the edges of the printed board (6).

10. Casting mould according to one of claims 7 through 9, characterized in that the distance finger (14) is a cylindrical pin which, with its face (15), supports the electric circuit (5) via a component (7), preferably a Hall IC, mounted, facing the pin, on the printed board.

11. Casting mould according to one of claims 7 through 10, characterized in that the centering fingers (13) can be extended in the area of the side walls of the casting mould from the bottom surface (10) of the casting mould (11) and they each have a sloping side surface with which they engage the edge of the printed board.

12. Casting mould according to one of claims 7 through 11, characterized in that the distance finger or fingers (14) are movable independently of the centering finger/s.

13. Casting mould according to one of claims 7 through 12, characterized in that a stop mechanism (16,17,19) is provided that has a retention pin (17) directed preferably sloping through the side wall of the casting mould (11) toward the electric circuit (5).

14. Casting mould according to claim 10, characterized in that the printed board (6) of the electric circuit (5) is equipped, on the side facing away from the distance finger (14), with a comparably large second component (8), in particular a magnet, and that the pin (17) engages this component in the retention status.

15. Circuit preferably produced with a method according to one of claims 1 through 3, for a movement-measuring system in motor vehicles, characterized in that the plastic case (4) of this circuit (5) is formed by a plastic mass directly enveloping the electric circuit (5).

16. Sensor according to claim 15, characterized in that it has a capsule (7) with one or more Hall elements and that the case thickness (a) before the capsule (7) is less than 0,3 mm.

17. Sensor according to claim 15 or 16, characterized in that a mounting opening (23) is cast integral with the case (4).

18. Sensor according to one of claims 15 through 17, characterized in that a connecting line (9) to the sensor circuit is run at an angle and the case envelopes the angle in anti-kink form.

19. Sensor according to one of claims 15 through 18, characterized by the use of injection materials with the same properties, in particular the expansion factor, as the enveloped electronic components.

## Revendications

1. Procédé pour enrober un circuit électronique, notamment le circuit formant capteur d'un dispositif de mesure de distance dans des véhicules automobiles, selon lequel on place le circuit électronique (5) sur un support de centrage (13a à 13d), qui est disposé de manière à être déplaçable à l'intérieur du boîtier d'un moule de coulée et est introduit dans le moule de coulée (11), on ferme ensuite le boîtier du moule de coulée et on le remplit avec une matière de base durcissable (4), la matière plastique se solidifie pendant le remplissage, et pendant la solidification, mais encore avant le durcissement, on rétracte le support de centrage (13) qui s'étend dans le moule de coulée (11) devant être rempli et, après le durcissement, on retire le circuit électrique enrobé (5), du moule de coulée (11), caractérisé en ce qu'en plus du support de centrage (13), une entretoise (14) supporte le circuit électronique (5) pendant le remplissage avec la matière plastique, entretoise que l'on retire du moule et ce d'une manière décalée dans le temps par rapport au support de centrage.

2. Procédé selon la revendication 1, caractérisé en ce qu'après son insertion, le circuit électrique est supporté en supplément, essentiellement en position centrée et de préférence essentiellement dans la même direction que par le dispositif de centrage (13), au moyen de l'entretoise (14), qui est introduite dans le moule de coulée (11) et qui fait saillie dans le moule de coulée (11) par au moins un doigt d'entretoisement (14) que l'on retire du moule (11) pendant la solidification de la matière plastique.

3. Procédé selon la revendication 2, caractérisé en ce que le doigt d'entretoisement (14) attaque un composant (7), de préférence un circuit intégré de Hall, du circuit électrique (5), qui est disposé sur une plaquette à circuits imprimés, qui s'appuie elle sur le support de centrage (13).

4. Procédé selon la revendication 2, caractérisé en ce que pendant la solidification de la matière plastique (4), on retire du moule de coulée (11) tout d'abord l'entretoise (14), puis au bout d'un intervalle de temps prédéterminé, le support de centrage (13).

5. Procédé selon la revendication 3, caractérisé en ce qu'on rétracte l'entretoise (14) jusqu'à ce que sa surface frontale (15), tournée vers le circuit électrique (5), se termine essentiellement de niveau avec la surface (10) du fond du moule de coulée (11).

6. Procédé selon l'une des revendications précédentes, caractérisé en ce qu'après l'insertion du circuit électrique (5) et avant l'introduction de la matière plastique, on fait ressortir un dispositif d'arrêt (16,17,19), qui empêche un déplacement, dirigé à l'opposé de l'entretoise (14), du circuit électrique lors de l'introduction de la matière plastique et que le dispositif de blocage est rétracté avant le retrait du support de centrage (13) et de l'entretoise (14).

7. Moule de coulée (11) pour l'enrobage d'un circuit électronique (5), notamment d'un circuit de capteur d'un dispositif de mesure de distance, dans lequel il est prévu un support de centrage (13), qui supporte le circuit électronique (5) pendant le remplissage avec une matière plastique et que l'on peut retirer du moule de coulée (11) pendant la solidification de la matière plastique, caractérisé en ce qu'en outre une entretoise (14) est pourvue d'au moins un doigt d'entretoisement, que l'on peut faire ressortir du moule de coulée (11) en un emplacement essentiellement central de la surface (10) du fond et qui supporte le circuit électrique inséré (5) essentiellement en un emplacement central, de préférence au niveau d'un composant du circuit électrique 5, qui est tourné vers le doigt d'entretoisement (14).

8. Moule de coulée selon la revendication 7, caractérisé en ce que le doigt d'entretoisement (14) de l'entretoise est disposé d'une manière essentiellement centrale par rapport aux doigts de centrage (13) du support de centrage et les doigts de centrage (13) supportent des parties extérieures, de préférence des parties de bord, du circuit électrique (5).

9. Moule de coulée selon la revendication 7 ou 8, caractérisé en ce que le circuit électrique (5) est disposé sur une plaquette à circuits imprimés (6) et que les doigts de centrage (13) s'appliquent de préférence sur les bords de la plaquette à circuits imprimés (6).

10. Moule de coulée selon l'une des revendications 7 à 9, caractérisé en ce que le doigt d'entretoisement (14) est une tige cylindrique, qui supporte par sa surface frontale (15) le circuit électrique (5) par l'intermédiaire d'un composant (7), de préférence un circuit intégré de Hall qui est fixé sur la plaquette à circuits imprimés, en étant tourné vers la tige.

11. Moule de coulée selon l'une des revendications 7 à 10, caractérisé en ce que les doigts de centrage (13) peuvent être ressortis hors de la face (10) du fond du moule de coulée (11) dans la zone des parois latérales du moule de coulée et possèdent chacun une surface latérale inclinée avec laquelle les doigts s'appliquent contre le bord de la plaquette à circuits imprimés.

12. Moule de coulée selon l'une des revendications 7 à 11, caractérisé en ce que le ou les doigts d'entretoisement (14) peuvent être déplacés d'une manière indépendante par rapport au(x) doigt(s) de centrage.

13. Moule de coulée selon l'une des revendications 7 à 12, caractérisé en ce qu'il est prévu un dispositif d'arrêt (16,17,19), qui possède une tige d'arrêt (17), dirigée de préférence obliquement à travers la paroi latérale du moule de coulée (11) en direction du circuit électrique (5).

14. Moule de coulée selon la revendication 10, caractérisé en ce que la plaquette à circuits imprimés (6) du circuit électrique (5) est équipée, sur le côté tourné à l'opposé du doigt d'entretoisement (14), d'un second composant de dimension comparable (8), notamment un aimant, et que dans l'état d'arrêt, la tige (17) s'applique contre ce composant.

15. Circuit électrique fabriqué à l'aide d'un procédé selon l'une des revendications 1 à 3, pour un dispositif de mesure de déplacement dans des véhicules automobiles, caractérisé en ce que le boîtier en matière plastique (4) de ce circuit (5) est formé par une masse de matière plastique enveloppant directement le circuit électrique (5).

16. Capteur selon la revendication 15, caractérisé en ce qu'il comporte une capsule (7) possédant un ou plusieurs éléments de Hall et que l'épaisseur (a) du boîtier devant la capsule (7) est inférieure à 0,3 mm.

17. Capteur selon la revendication 15 ou 16, caractérisé en ce qu'une ouverture de fixation (23) est formée par moulage sur le boitier (4).

18. Capteur selon l'une des revendications 15 à 17, caractérisé en ce qu'un conducteur d'alimentation (9) est relié au circuit du capteur en formant un coude et que le boîtier entoure le coude sous la forme d'un élément de protection coudé.

19. Capteur selon l'une des revendications 15 à 18, caractérisé par l'utilisation de matériaux de moulage par injection possédant les mêmes propriétés, notamment le même coefficient de dilatation thermique, que les composants électroniques enrobés.
